# EUROPEAN PATENT APPLICATION

(11) **EP 1 544 326 A1**
(43) Date of publication of application: **22.06.2005**
(21) Application number: 03792696.1
(22) Date of filing: 18.08.2003
(51) Int. Cl.: C25D 5/26, H01M 2/02

(54) **SURFACE TREATED STEEL PLATE FOR BATTERY CASES AND BATTERY CASE USING SAME**

(30) Priority: 20.08.2002 JP 2002239866
(71) Applicant: Toyo Kohan Co., Ltd., Tokyo 102-8447 (JP)
(72) Inventor: OHMURA, Hitoshi c/o TOYO KOHAN CO., LTD., Kudamatsu-shi, Yamaguchi 744-8611 (JP); TOMOMORI, Tatsuo c/o TOYO KOHAN CO., LTD., Kudamatsu-shi, Yamaguchi 744-8611 (JP); HONDA, Yoshitaka c/o TOYO KOHAN CO., LTD., Kudamatsu-shi, Yamaguchi 744-8611 (JP); YAMANE, Eiji c/o TOYO KOHAN CO., LTD., Kudamatsu-shi, Yamaguchi 744-8611 (JP)
(74) Representative: VOSSIUS & PARTNER
(86) International application number: PCT/JP2003/010404
(87) International publication number: WO 2004/018739

(57) **Abstract**

A surface treated steep plate excellent in battery performance and a battery case comprising the same are disclosed. The battery case is produced by forming a surface treated steel sheet having an indium layer on the outermost side to serve as the inner surface of a battery case of a plating base steel plate by deep drawing, DI or DTR.

## Description

### Technical Field:

This invention relates to a container for holding an alkaline solution, and more particularly to a surface treated steel sheet for battery cases, such as for alkaline manganese or nickel-cadmium batteries, and a battery case formed therefrom by the deep drawing, DI or DTR method.

### Background Art:

Battery cases for holding a strongly alkaline solution, such as for alkaline manganese or nickel-cadmium batteries, have hitherto been made by press forming a battery case from a cold rolled steel strip and barrel plating it, or by press forming a battery case from a nickel-plated steel strip.

The use of nickel plating for batteries, such as alkaline manganese or nickel-cadmium batteries, as stated, is due to the high resistance of nickel to alkaline corrosion, as those batteries use mainly strongly alkaline potassium hydroxide as the electrolyte, also to the constant contact resistance of nickel which is important when the batteries are connected to external terminals, and moreover to the high spot weldability pf nickel, as the manufacture of batteries relies upon spot welding to weld the component parts together into batteries.

The DI (drawing and ironing) method has recently come to be employed as a method of press forming a battery case with a thin wall to achieve an increased battery capacity, instead of the deep drawing method (Japanese Patent Office Official Gazette JP-B-H7-99686). The DI or DTR (drawing thin and redraw) method can advantageously form a case having a sidewall thickness smaller than its bottom thickness and a correspondingly greater space for holding the active substances for the positive and negative electrodes and thereby making it possible to obtain a battery of increased capacity, while its large bottom thickness gives the battery an improved pressure resistance.

Moreover, the alkaline manganese batteries have recently come to be required to show an outstanding performance in internal resistance, short-circuit current, discharge characteristics, etc.

The battery cases formed by the deep drawing, DI or DTR method have recently come to have an inner surface layer formed by a nickel plating layer or an iron-nickel diffused layer to achieve an improved battery performance, as stated above.

The can having a nickel plating layer or an iron-nickel diffused layer as the outermost layer of its inner surface restricts the battery characteristics and some improvement is desired.

It is an object of this invention to provide a battery case achieving an outstanding battery performance and a surface treated steel sheet which is suitable for use in manufacturing such a battery case.

### Disclosure of the Invention:

Under these circumstances, we, the inventors of this invention, have found that a battery case formed by the deep drawing, DI or DTR method provides an outstanding battery performance in internal resistance, short-circuit current, etc. if it has an indium layer as the outermost layer of its inner surface.

In order to attain the above object, a surface treated steel sheet for battery cases as set forth in claim 1 is characterized by having an indium layer on at least one surface thereof. The indium layer is preferably formed by electrolytic plating and is preferably formed on the steel surface supposed to form the inner surface of a battery case.

The steel sheet preferably has a nickel or nickel alloy layer formed as a lower layer on its surface supposed to form the inner surface of a battery case and an indium layer formed as an upper layer thereon. The nickel alloy layer preferably contains one or more of a nickel-tin alloy, a nickel-iron alloy, a nickel-iron diffused layer, a nickel-phosphorus alloy and a nickel-cobalt alloy.

Moreover, the steel sheet preferably has an iron-nickel diffused layer formed as a lower layer on its surface supposed to form the inner surface of a battery case, a nickel layer as a middle layer and an indium layer as an upper layer.

A battery case as set forth in claim 7 is characterized by being formed by the deep drawing, DI or DTR method from a surface treated steel sheet for battery cases as set forth in any of claims 1 to 6.

### Best Mode of Carrying Out the Invention:

The invention will now be described progressively.

### (1) Steel Sheet:

A mild steel sheet is first prepared for manufacturing a battery case according to this invention. The mild steel sheet is preferably of, for example, cold rolled Al-killed low-carbon steel, very low-carbon steel having a carbon content of 0.003% or less, or non-aging very low-carbon steel containing niobium, boron and titanium.

The mild steel sheet is used to facilitate the formation of a can by the deep drawing, DI or DTR method.

### (2) Nickel or Nickel Alloy Plating:

Referring to the formation of nickel or nickel alloy plating on a battery case and a surface treated steel sheet as stated above, it is possible to use any known electroless plating or electroplating bath, such as a vat, a sulfamate bath, a borofluoride bath or a chloride bath. A plating thickness of, say, 0.5 to 3.0 µm is preferred. Any thickness below 0.5 µm is objected to from the standpoint of alkali resistance and any thickness over 3.0 µm is economically undesirable. Nickel alloy plating is preferably carried out by performing electroplating after adding a compound of iron, tin, phosphorus, cobalt, etc. to any such known bath. Nickel-phosphorus alloy plating may be carried out by performing electroless plating in a known electroless plating bath, such as phosphorous acid, phosphate, hypophosphite or hypophosphite.

### (3) Diffusion by Heat Treatment:

After nickel or nickel alloy plating as described at (2) above, an alloy layer may be formed by diffusion by heat treatment. In the case of, for example, nickel or nickel-iron alloy plating, a nickel-iron diffused layer is formed. If tin plating is performed after nickel plating at (2) above and is followed by heat treatment, there is formed a nickel-tin diffused layer, or two layers consisting of an iron-nickel diffused layer as a lower layer and a nickel-tin diffused layer as an upper layer. The nickel-tin diffused layer is, among others, preferred for its high alkali resistance.

The heat treatment is preferably carried out in a non-oxidizing or reducing protective gas atmosphere to prevent the formation of any oxide film on the surface of the alloy layer. An inert gas, such as nitrogen, argon or neon, is suitable for use as the non-oxidizing gas, and hydrogen or ammonia gas is, for example, suitable as the reducing gas. The heat treatment may be carried out by batch or continuous annealing. A heat treating temperature of 300 to 900°C is preferable and a treating time of, say, 30 seconds to 15 hours is preferable, but the conditions of heat treatment depend on the steel sheet used, for example, a very low-carbon steel having a carbon content of 0.003% by weight or less requires a constant temperature and a short time, since the steel base has a high recrystallization temperature.

### (4) Indium Plating:

After its nickel or nickel alloy plating, or after its subsequent heat treatment as described, the steel sheet is plated with indium. Indium is a metal which is of high alkali resistance and low contact resistance and is soft, and makes, therefore, intimate contact with a positive electrode mixture. Although for the purpose of this invention, it is satisfactory to use for indium plating any known plating bath, such as a high pH cyanide bath, a sulfate bath, a borofluoride bath, a sulfamate bath, a metasulfonate bath or an NTA bath, it is often preferable to use a simple sulfate bath.

This bath contains 10 to 25 g of indium sulfate and 0 to 10 g of sodium sulfate per liter and is used for plating at a pH of 2.0 to 2.7, at room temperature and at a current density of 2 to 4 A/dm² by using an indium anode. The thickness of an indium plating layer is usually controlled by employing a different current density.

The plating layer preferably has a thickness of, say, 50 to 500 mg/m². Its thickness below 50 mg/m² is hardly effective for realizing a lower contact resistance and its thickness over 500 mg/m² is economically disadvantageous.

### Examples:

The invention will now be described by examples. Cold rolled, annealed and temper rolled low-carbon aluminum- killed steel sheets 0.25 and 0.4 mm, respectively, in thickness were employed as the steel sheets to be plated. Cold rolled very low-carbon aluminum-killed steel sheets of 0.25 mm and 0.4 mm, respectively, in thickness were also employed as the steel sheets to be plated. The chemical composition of the two kinds of steel sheets was as shown below.
C: 0.04% (by weight; in every other case, too)
Si: 0.01%
Mn: 0.22%
P: 0.012%
S: 0.006%
Al: 0.0.48%
N: 0.0025%

The steel sheets to be plated were subjected to pretreatment by customary methods, including alkali electrolytic degreasing, water rinsing, sulfuric acid immersion and water rinsing and then to ordinary treatment including non-lustrous nickel plating, as shown below.

### 1) Non-Lustrous Nickel Plating

Non-lustrous nickel plating was performed by using a nickel sulfate bath.

### Bath composition:

| | |
|---|---|
| Nickel sulfate (NiSO₄·6H₂O) | 300 g/ℓ |
| Nickel chloride (NiCl₂·6H₂O) | 45 g/ℓ |
| Boric acid (H₃BO₃) | 30 g/ℓ |

Bath pH: 4 (adjusted by sulfuric acid)
Agitation: Air agitation
Bath temperature: 60°C
Anode: A titanium basket filled with S pellets
(trade name of product of INCO; spherical) and covered with a polypropylene bag.

The plating bath which will be described below is used for semi-lustrous nickel plating. This semi-lustrous nickel plating may alternatively replace the first non-lustrous nickel plating.

### 2) Semi-Lustrous Nickel Plating

Semi-lustrous nickel plating was performed by adding a polyoxyethylene addition product of unsaturated alcohol and unsaturated carboxylic acid formaldehyde appropriately as semi-lustrous agents to a nickel sulfate bath.

### Bath composition:

| | |
|---|---|
| Nickel sulfate (NiSO₄·6H₂O) | 300 g/ℓ |
| Nickel chloride (NiCl₂·6H₂O) | 45 g/ℓ |
| Boric acid (H₃BO₃) | 30 g/ℓ |
| Polyoxyethylene addition product of unsaturated alcohol | 3.0 g/ℓ |
| Unsaturated carboxylic acid formaldehyde | 3.0 g/ℓ |

Bath pH: 4 (adjusted by sulfuric acid)
Agitation: Air agitation
Bath temperature: 60°C
Anode: A titanium basket filled with S pellets
(trade name of product of INCO; spherical) and covered with a polypropylene bag.

A nickel-tin alloy layer can be formed by diffusion treatment as described later, if tin plating is performed after the non-lustrous or semi-lustrous nickel plating.

The nickel plating described above may be replaced by nickel alloy plating.

### 3) Nickel Alloy Plating

Nickel alloy plating is performed by adding a known compound of an alloying element, such as iron, tin, phosphorus or cobalt, to a known nickel plating bath. For example, nickel-iron alloy plating was performed by adding iron sulfate appropriately to a nickel sulfate bath to have iron included in a nickel plating layer.

### Bath composition:

| | |
|---|---|
| Nickel sulfate (NiSO₄·6H₂O) | 320 g/ℓ |
| Nickel chloride (NiCl₂·6H₂O) | 20 g/ℓ |
| Iron sulfate (FeSO₄·6H₂O) | (appropriately) |
| Boric acid (H₃BO₃) | 30 g/ℓ |

Bath pH: 4 (adjusted by sulfuric acid)
Agitation: Air agitation
Bath temperature: 60°C
Anode: A titanium basket filled with S pellets
(trade name of product of INCO; spherical) and covered
with a polypropylene bag. If it is desired to have phosphorus or cobalt included instead of iron, sodium hypophosphite or cobalt sulfate may be added appropriately to the plating bath to replace iron sulfate.

The iron, phosphorus or cobalt contents of plating films and their thicknesses were altered under the conditions stated above. The plating conditions are shown in Table 1. A known fluoride bath can alternatively be used for nickel-tin alloy plating.

### 4) Diffusion by Heat Treatment

Heat treatment may be performed for diffusion after the nickel or nickel alloy plating described above. Heat treatment may alternatively be performed for diffusion after the formation of two plating layers by nickel and tin plating. The diffusion treatment is preferably performed in a non-oxidizing or reducing atmosphere, for example, in a non-oxidizing atmosphere containing 6.5% of hydrogen, the rest of which is nitrogen. A known apparatus, such as a batch or continuous annealing furnace, may be used for the diffusion treatment.

The conditions of the heat treatment are shown in Table 1.

### 5) Indium Plating

Indium plating was formed under the following conditions:

### Bath composition:

| | |
|---|---|
| Indium sulfate | 10 to 25 g/ℓ |
| Sodium sulfate | 0 to 10 g/ℓ |

pH: 2.0 to 2.7
Anode: Indium
Bath temperature: Room temperature
Current density: 2 to 4 A/dm²

The thickness of an indium plating layer is usually controlled by altering the current density, and is shown in Table 1.

### (Forming a Battery Case)

The formation of a battery case by the DI method was carried out by using the plated steel sheet having a thickness of 0.4 mm, shaping a blank having a diameter of 41 mm into a cup having a diameter of 20.5 mm and subjecting it to redrawing and two stages of ironing by a DI machine to form a case having an outside diameter of 13.8 mm, a wall thickness of 0.20 mm and a height of 56 mm. It was finally trimmed at its top to give an LR6 battery case having a height of 49.3 mm. The DI method was applied to the surface treated steel sheets according to Examples 1 to 3 and Comparative Example 1.

The formation of a battery case by the DTR method was carried out by using a plated steel sheet having a thickness of 0.25 mm, punching it into a blank having a diameter of 58 mm and subjecting it to several times of drawing and redrawing to form an LR6 battery case having an outside diameter of 13.8 mm, a wall thickness of 0.20 mm and a height of 49.3 mm. The DTR method was applied to the surface treated steel sheets according to Examples 4 to 6 and Comparative Example 2.

The formation of a battery case by the deep drawing method was carried out by using a plated steel sheet having a thickness of 0.25 mm, punching it into a blank having a diameter of 57 mm and subjecting it to several times of drawing and redrawing to form an LR6 battery case having an outside diameter of 13.8 mm, a wall thickness of 0.25 mm and a height of 49.3 mm. The deep drawing method was applied to the surface treated steel sheets according to Examples 7 and 8 and Comparative Example 3.

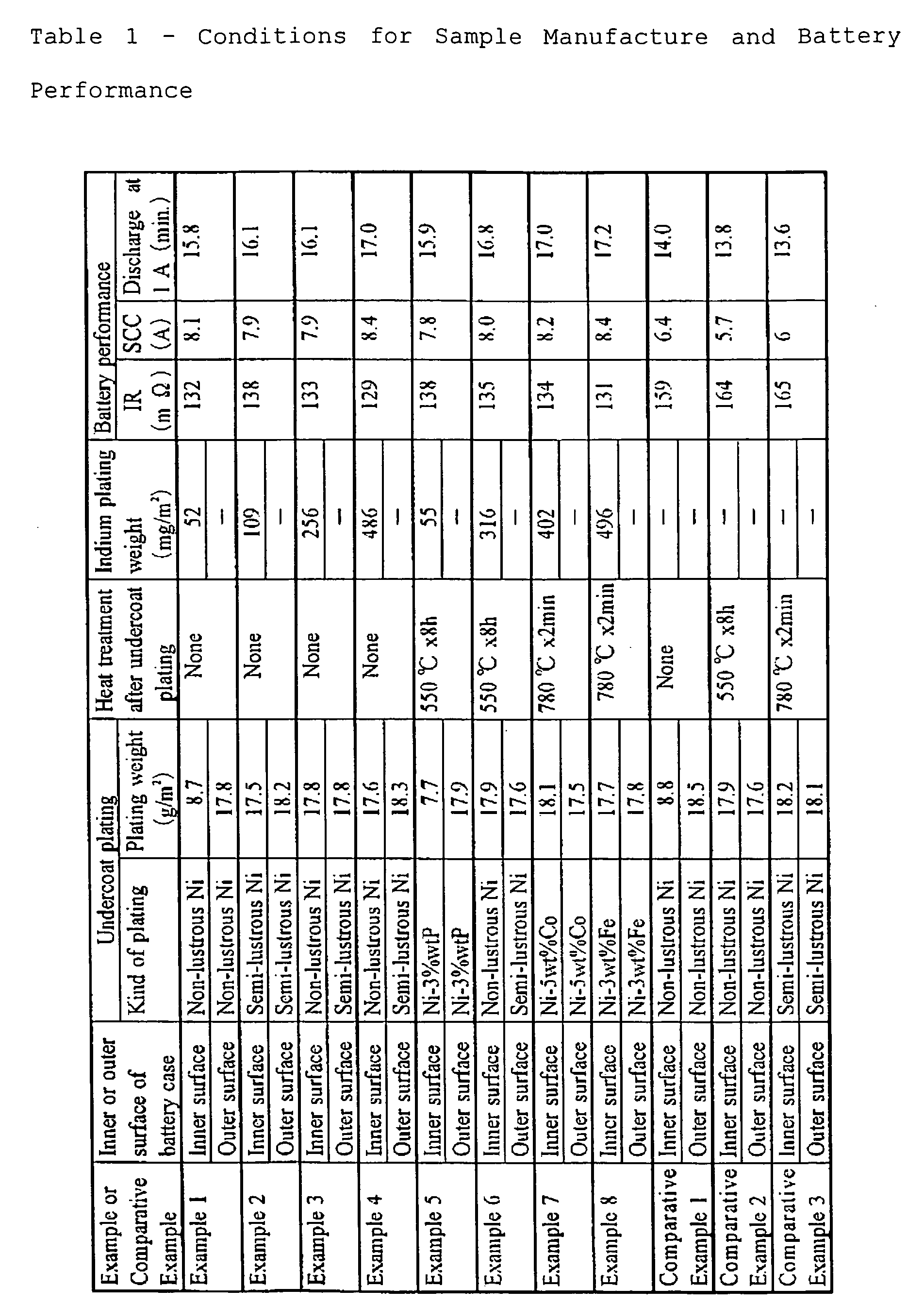

The battery cases as formed above were used for manufacturing alkaline manganese batteries and they were evaluated for characteristics. The results of their evaluation are shown in Table 1.

### [Evaluation for Internal Resistance (IR)]

Each battery as manufactured was examined for its internal resistance (mΩ) by the AC impedance method after three days of storage at 80°C.

### [Evaluation for Short-Circuit Current (SCC)]

After three days of storage at 80°C, an ammeter was connected to each battery as manufactured to form a closed circuit and the current value of the battery was measured as its short-circuit current.

### [Discharge Characteristics]

After three days of storage at 80°C, a resistance of 2 Ω was connected to each battery as manufactured to form a closed circuit and time was measured until a voltage of 0.9 V was reached.

### Industrial Applicability:

As is obvious from Table 1, the alkaline manganese batteries made by using for the positive electrode plate a steel sheet having an indium layer formed on its surface forming the inner surface of the battery case have a low internal resistance and a high short-circuit current as compared with any known alkaline manganese dry battery having a nickel plating or iron-nickel diffused layer on its surface, and also differ significantly from any such known alkaline manganese dry battery in the duration of continuous discharge.

## Claims

1. A surface treated steel sheet for battery cases having an indium layer at least on one surface thereof.

2. A surface treated steel sheet for battery cases as set forth in claim 1, wherein the indium layer is formed by electrolytic plating.

3. A surface treated steel sheet for battery cases as set forth in claim 1 or 2, wherein the indium layer is formed on the steel surface supposed to form the inner surface of a battery case.

4. A surface treated steel sheet for battery cases as set forth in any of claims 1 to 3, wherein the steel sheet has a nickel or nickel alloy layer formed as a lower layer on its surface supposed to form the inner surface of a battery case and an indium layer formed as an upper layer thereon.

5. A surface treated steel sheet for battery cases as set forth in claim 4, wherein the nickel alloy layer contains one or more of a nickel-tin alloy, a nickel-iron alloy, a nickel-iron diffused layer, a nickel-phosphorus alloy and a nickel-cobalt alloy.

6. A surface treated steel sheet for battery cases as set forth in any of claims 1 to 4, wherein the steel sheet has an iron-nickel diffused layer formed as a lower layer on its surface supposed to form the inner surface of a battery case, a nickel layer as a middle layer and an indium layer as an upper layer.

7. A battery case formed by the deep drawing, DI or DTR method from a surface treated steel sheet for battery cases as set forth in any of claims 1 to 6.
